# FASCICULE DE BREVET EUROPEEN

(11) **EP 2 553 655 B1**
(45) Date de publication et mention de la délivrance du brevet: **26.02.2014**
(21) Numéro de dépôt: 11708875.7
(22) Date de dépôt: 17.03.2011
(51) Int. Cl.: G06T 1/20

(54) **ARCHITECTURE DE TRAITEMENT D'UN FLUX DE DONNÉES PERMETTANT L'EXTENSION D'UN MASQUE DE VOISINAGE**
ARCHITEKTUR ZUR DATENSTROMVERARBEITUNG MIT FUNKTION ZUR ERWEITERUNG DER NACHBARMASKE
DATA STREAM PROCESSING ARCHITECTURE ENABLING EXTENSION OF NEIGHBORHOOD MASK

(30) Priorité: 26.03.2010 FR 1052207
(43) Date de publication de la demande: 06.02.2013
(73) Titulaire: Commissariat à l'Énergie Atomique et aux Énergies Alternatives, 75015 Paris (FR)
(72) Inventeur: LECELLIER, Maria, F-92340 Bourg La Reine (FR); GUYETANT, Stéphane, F-92350 Le Plessis Robinson (FR); SCHMIT, Renaud, F-28700 Auneau (FR)
(74) Mandataire: Bordier, Sylvain
(86) Numéro de dépôt international: PCT/EP2011/054086
(87) Numéro de publication internationale: WO 2011/117144

(56) Documents cités:
- GOMEZ M E ET AL: "A Memory-Effective Routing Strategy for Regular Interconnection Networks", PARALLEL AND DISTRIBUTED PROCESSING SYMPOSIUM, 2005. PROCEEDINGS. 19TH IEEE INTERNATIONAL DENVER, CO, USA 04-08 APRIL 2005, 4 avril 2005 (2005-04-04), pages 41B-41B, XP010785531,
- ELDRIDGE M ET AL: "POMEGRANATE: A FULLY SCALABLE GRAPHICS ARCHITECTURE", COMPUTER GRAPHICS. SIGGRAPH 2000 CONFERENCE PROCEEDINGS. NEW ORLEANS, LA, JULY 23 - 28, 2000, NEW YORK, NY : ACM, US, 23 juillet 2000 (2000-07-23), pages 443-454, XP001003585,
- Kilgariff E., R. Fernando: "The GeForce 6 series GPU Architecture" In: Pharr M., Randima F.: "GPU Gems", 2005, Addison-Wesley, XP002607834, vol. 2, pages 471-491, le document en entier
- DUATO J; LOPEZ P; SILLA F; YALAMANCHILI S: "A high performance router architecture for interconnection networks", PROCEEDINGS OF THE 1996 INTERNATIONAL CONFERENCE ON PARALLEL PROCESSING, vol. 1, 16 août 1996 (1996-08-16), pages 61-68, XP002607835,

## Description

L'invention se situe dans le domaine des architectures de traitement travaillant en flux de données sur des voisinages de pixels, ayant un fort besoin de flexibilité et étant fortement contraintes en surface silicium et en consommation d'énergie. Elle s'applique essentiellement au traitement d'image embarqué comme la téléphonie mobile, les baladeurs multimédia ou les appareils photo et les caméscopes numériques. D'autres domaines peuvent être concernés, tels que la robotique autonome, les réseaux de capteurs ou l'aide à la conduite de véhicules. Plus précisément, l'invention concerne une architecture de traitement d'un flux de données formant des matrices de pixels de NI lignes par Nc colonnes, l'architecture comportant des unités de traitement et des moyens d'interconnexion pour transférer le flux de données entre les unités de traitement.

Dans le domaine du traitement d'image, des masques de voisinage sont couramment employés lorsqu'il est nécessaire de considérer l'environnement d'un pixel à traiter. Un masque de voisinage se définit comme une zone de sélection dans l'image. Avec l'évolution des traitements d'image, les masques de voisinage sont de plus en plus étendus. Dans le même temps, les coûts de recherche et développement et de fabrication des architectures supportant le traitement d'image contraignent fortement leur développement en termes de surface silicium et de consommation électrique, notamment lorsque ces architectures sont dédiées à des applications embarquées à destination du grand public. L'enjeu dans ce domaine est donc d'avoir des architectures de calcul évolutives et flexibles qui, à circuit identique, sont capables de supporter les traitements existants ainsi que ceux à venir dont la complexité calculatoire sera plus importante. L'une des solutions connues pour répondre à ces besoins consiste à utiliser des architectures modulaires, basées sur des unités de traitement de flux comportant chacune un ensemble de processeurs de voisinage fonctionnant en parallèle sur des données voisines. Un premier exemple d'architecture est décrit dans la demande de brevet FR 2 936 626. Chaque unité de traitement comprend un ensemble de processeurs et une unité de mémorisation contenant l'ensemble des voisinages accessibles par les processeurs. Cependant, un processeur ne peut accéder qu'au voisinage qui lui est attribué. En outre, la dimension de l'unité de mémorisation est figée. Par conséquent, la taille des voisinages accessibles par les processeurs est limitée à celle prévue au moment de la conception du circuit. Un deuxième exemple d'architecture est proposé par le Korea Advanced Institute of Science and Technology et décrit dans K. Kim et al, "A 125 GOPS 583 mW Network-on-Chip based parallel processor with bio-inspired visual attention engine", IEEE journal of solid-state circuits, vol. 44, n° 1, janvier 2009. Chaque unité de traitement comprend un ensemble de processeurs et une mémoire locale. Chaque processeur a un accès total à la mémoire locale de l'unité de traitement à laquelle il appartient. Les mémoires locales de différentes unités de traitement peuvent communiquer entre elles et chaque processeur peut communiquer avec des processeurs voisins gauche et droite, y compris si un processeur voisin se trouve dans une autre unité de traitement. Ces communications entre mémoires locales et entre processeurs permettent d'étendre la taille des voisinages accessibles par les processeurs. L'architecture est cependant mal adaptée à une telle utilisation : d'une part la communication de processeur à processeur voisin gauche/droite entre unités de traitement ne permet d'échanger qu'une donnée par cycle, ce qui limite en pratique l'extension de la taille des voisinages. D'autre part, la communication de mémoire locale à mémoire locale implique un écrasement d'au moins une partie des données présentes dans l'une des mémoires locales, ce qui contraint l'ordre dans lequel les données doivent être traitées.

Le document: Kilgariff E., R. Fernando: "The GeForce 6 series GPU Architecture", in: Pharr M., Randima F.: "GPU Gems", 2005 , Addison-Wesley, vol. 2, pages 471-491, décrit une architecture de traitement travaillant en flux de données sur des voisinage de pixels (Figure 30-3).

Le document Gómez M. E., P. López and J Duato: "A Memory-Effective Routing Strategy for Regular Interconnection Networks" décrit un procédé de routage pour un réseau d'interconnexion, par exemple utilisé pour des systèmes de traitement en parallèle.

Un but de l'invention est de proposer une architecture de traitement d'un flux de données du type de celle décrite dans la demande de brevet FR 2 936 626, qui permette de réaliser des traitements sur des voisinages de pixels de dimension supérieure à celle qu'un processeur unique est capable de traiter. Ce but est atteint par l'introduction d'un gestionnaire de mémorisation apte à mettre en forme les données du flux dans les unités de mémorisation des différentes unités de traitement de manière à ce qu'un voisinage puisse être réparti dans les unités de mémorisation de plusieurs unités de traitement, et par l'ajout de moyens de connexion entre processeurs voisins d'une même unité de traitement ou d'unités de traitement différentes, de sorte qu'un processeur puisse communiquer avec le ou les processeurs ayant accès à des pixels du voisinage considéré. Plus précisément, l'invention a pour objet une architecture de traitement d'un flux de données, les données formant des matrices de pixels de dimension NI x Nc, l'architecture comprenant :
- des unités de traitement, chaque unité de traitement étant apte à recevoir un flux de données en entrée et à délivrer un flux de données en sortie, et
- des moyens d'interconnexion aptes à recevoir un flux de données en entrée de l'architecture et les flux de données en sortie des unités de traitement, et aptes à délivrer un flux de données en sortie de l'architecture, chaque unité de traitement comportant :
   ■ une unité de contrôle (UC) apte à fournir des instructions,
   ■ un ensemble de processeurs de voisinage aptes à réaliser les instructions reçues de l'unité de contrôle et à fournir des données formant le flux de données en sortie de l'unité de traitement, et
   ■ une unité de mémorisation de voisinages permettant à chaque processeur de voisinage d'accéder à des données du flux reçu par l'unité de traitement formant un voisinage de pixels de dimension VI x Vc, les voisinages accessibles par les processeurs étant centrés sur des pixels contigus d'une même ligne d'une matrice, deux processeurs étant voisins lorsque les voisinages auxquels ils peuvent accéder sont centrés sur des pixels contigus d'une même ligne d'une matrice,
      caractérisée en ce que deux unités de traitement peuvent être couplées selon un axe Nord/Sud et comportent chacune :
- un même nombre N de processeurs de voisinage,
- des moyens de connexion intra-unité permettant à chaque processeur de voisinage d'échanger des données avec chacun de ses processeurs voisins, de sorte que le voisinage de pixels accessible par un processeur de voisinage puisse être étendu à l'ensemble des voisinages de pixels accessibles par les processeurs de voisinage de l'unité de traitement couplée considérée, ledit ensemble formant un voisinage de pixels de dimension VI x (Vc+N-1),
   l'architecture comportant, en outre :
- un gestionnaire de mémorisation apte à recevoir un flux de données des moyens d'interconnexion et permettant aux processeurs de voisinage d'une première unité de traitement couplée d'accéder à des voisinages de pixels contigus avec les voisinages de pixels accessibles par les processeurs de voisinage d'une deuxième unité de traitement couplée, de sorte que les voisinages de pixels accessibles par les processeurs de voisinage des deux unités de traitement couplées puissent former un voisinage de dimension 2.VI x (Vc+N-1), et
- des moyens de connexion selon l'axe Nord/Sud permettant à chaque processeur de voisinage de la première unité de traitement couplée d'échanger des données avec l'un des processeurs de voisinage de la deuxième unité de traitement couplée, les processeurs de voisinage étant reliés deux à deux de manière à avoir accès à des voisinages de pixels centrés sur une même colonne d'une matrice, de sorte que le voisinage de pixels accessible par chaque processeur de voisinage puisse être étendu aux voisinages de pixels accessibles par le processeur de voisinage auquel il est relié.

L'invention a notamment pour avantage que l'augmentation de la taille du masque de voisinage accessible s'accompagne d'une augmentation de la capacité de calcul sur ce voisinage.

Selon une forme particulière de réalisation, le gestionnaire de mémorisation comporte :
■ une mémoire de réserve pour chaque unité de traitement couplée selon l'axe Nord/Sud, chaque mémoire de réserve étant apte à stocker des données du flux reçu par l'unité de traitement considérée pouvant former un voisinage global de pixels de dimension VI x Nc, l'unité de mémorisation de voisinages de chaque unité de traitement couplée permettant à chacun de ses processeurs de voisinage d'accéder à des données de la mémoire de réserve associée à l'unité de traitement couplée considérée, et
■ des moyens de connexion entre les mémoires de réserve, de sorte que les mémoires de réserve associées à deux unités de traitement couplées puissent stocker des données pouvant former un voisinage couplé de pixels de dimension maximale 2.VI x Nc.

Les mémoires de réserve peuvent chacune comporter VI lignes mémoire, chaque ligne mémoire étant apte à stocker des données d'une ligne d'une matrice, les lignes mémoire étant reliées en série, de sorte qu'un flux de données stocké sur une première ligne mémoire puisse être transmis successivement aux autres lignes mémoire.

Les moyens de connexion entre deux mémoires de réserve peuvent comporter un multiplexeur à VI entrées et une sortie, chaque entrée pouvant être reliée à l'une des lignes mémoire d'une première mémoire de réserve, la sortie pouvant être reliée à une entrée de la deuxième mémoire de réserve.

Selon une forme particulière de réalisation, deux unités de traitement peuvent être couplées selon un axe Est/Ouest, l'architecture comportant, en outre, des moyens de connexion selon l'axe Est/Ouest permettant à un processeur de voisinage d'une première unité de traitement couplée selon l'axe Est/Ouest d'échanger des données avec un processeur de voisinage voisin d'une deuxième unité de traitement couplée selon l'axe Est/Ouest à la première unité de traitement, de sorte que le voisinage de pixels accessible par chacun desdits processeurs de voisinage soit formé de la réunion des voisinages de pixels accessibles par chacun des deux processeurs de voisinage.

Le gestionnaire de mémorisation peut alors comporter :
■ une mémoire de réserve pour chaque unité de traitement couplée selon l'axe Est/Ouest, chaque mémoire de réserve étant apte à stocker des données du flux reçu par l'unité de traitement considérée pouvant former un voisinage global de pixels de dimension VI x Nc, l'unité de mémorisation de voisinages de chaque unité de traitement couplée permettant à chacun de ses processeurs de voisinage d'accéder à des données de la mémoire de réserve associée à l'unité de traitement couplée considérée, et
■ des moyens de connexion entre les mémoires de réserve, de sorte que les mémoires de réserve associées à deux unités de traitement couplées selon l'axe Est/Ouest puissent stocker des données pouvant former un voisinage couplé de pixels de dimension maximale VI x 2.Nc.

L'architecture peut comporter, en outre, des moyens de synchronisation des unités de traitement couplées pour vérifier que les données devant être récupérées par les processeurs de voisinage d'une première unité de traitement ont été mises à disposition par les processeurs de voisinage d'une deuxième unité de traitement couplée avec la première unité de traitement.

Les moyens de synchronisation des unités de traitement couplées peuvent comprendre un drapeau pour chaque couplage entre deux unités de traitement, chaque drapeau pouvant indiquer soit que les données devant être récupérées par les processeurs de voisinage d'une première unité de traitement ont été mises à disposition par les processeurs de voisinage d'une deuxième unité de traitement couplée avec la première unité de traitement, soit que lesdites données ne sont pas disponibles.

Chaque unité de mémorisation de voisinages peut comprendre une mémoire permettant de stocker les données formant les voisinages de pixels auxquels les processeurs de voisinage peuvent accéder.

Selon une forme particulière de réalisation, les moyens de connexion selon l'axe Nord/Sud comportent, pour chaque processeur de voisinage d'une unité de traitement couplée selon l'axe Nord/Sud, un registre de données accessible par le processeur de voisinage auquel il est relié.

Toujours selon une forme particulière de réalisation, les moyens de connexion intra-unité et, le cas échéant, les moyens de connexion selon l'axe Est/Ouest, comportent, pour chaque processeur de voisinage, un premier registre de données accessible par l'un de ses processeurs de voisinage voisins, et un deuxième registre de données accessible par son autre processeur de voisinage voisin.

L'architecture peut comporter K.M unités de traitement organisées en une matrice de K unités de traitement couplées deux à deux selon l'axe Nord/Sud et M unités de traitement couplées deux à deux selon l'axe Est/Ouest, le gestionnaire de mémorisation étant configuré de sorte que les mémoires de réserve puissent stocker des données pouvant former un voisinage couplé de dimension K.VI x M.Nc, et les moyens de connexion étant configurés de sorte que le voisinage de pixels accessible par chaque processeur de voisinage d'une unité de traitement couplée puisse être étendu aux voisinages de pixels accessibles par les processeurs de voisinage des unités de traitement couplées.

L'invention sera mieux comprise et d'autres avantages apparaîtront à la lecture de la description qui va suivre, faite en regard de dessins annexés sur lesquels :
- la figure 1 est un synoptique d'une architecture de traitement d'un flux de données sur laquelle est basée l'invention ;
- la figure 2 représente, par un synoptique, un exemple d'architecture de traitement d'un flux de données selon l'invention ;
- la figure 3 illustre le principe de fonctionnement d'une mémoire de réserve et d'une unité de mémorisation de voisinages dans l'architecture de la figure 2 ;
- la figure 4 illustre le principe de fonctionnement des mémoires de réserve et des unités de mémorisation de voisinages de deux unités de traitement couplées selon un axe Nord/Sud ;
- la figure 5 illustre le rôle de moyens de connexion intra-unité dans l'architecture de la figure 2 ; et
- la figure 6 illustre le rôle des moyens de connexion infra-unité et de moyens de connexion Nord/Sud dans l'architecture de la figure 2.

La description qui suit se rapporte à des architectures de traitement d'un flux de données vidéo formant des images de dimension NI x Nc, c'est-à-dire de NI lignes par Nc colonnes de pixels. Ces architectures permettent notamment de réaliser des traitements d'image dits bas niveau, tels que la détection de contours ou des opérations morphologiques (érosion, dilatation, distance de Manhattan), et des traitements d'image dits haut niveau, tels que la détection d'objets. Ces traitements nécessitent souvent de considérer tout le voisinage du pixel traité. A cet effet, des masques de voisinage sont utilisés. Un masque de voisinage se définit comme une zone de sélection de dimension VI x Vc, c'est-à-dire de VI lignes par Vc colonnes de pixels. L'invention s'applique néanmoins au traitement de tout flux de données, dès lors que les données peuvent être agencées de façon cohérente sous forme de matrices à deux dimensions.

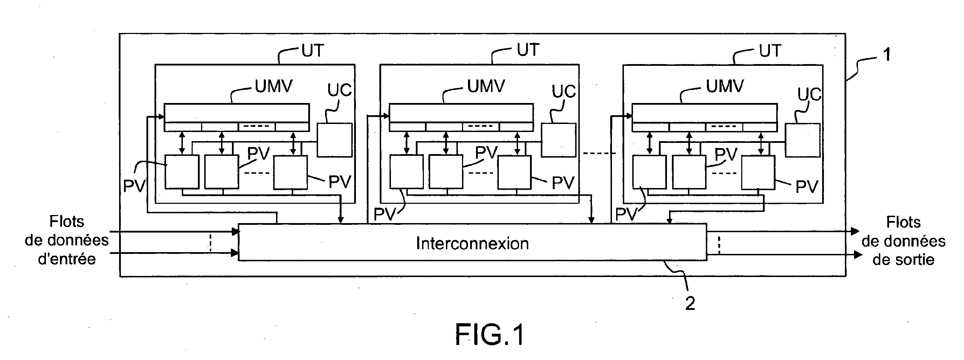

La figure 1 est un synoptique d'une architecture de traitement d'un flux de données sur laquelle est basée l'invention. L'architecture 1 comprend des unités de traitement UT et des moyens d'interconnexion 2 permettant de transférer des flux de données au sein de l'architecture 1. En l'occurrence, les moyens d'interconnexion 2 reçoivent un ou plusieurs flux de données d'entrée, correspondant aux flux de données reçus par l'architecture 1, et délivrent un ou plusieurs flux de données de sortie, correspondant aux flux de données délivrés par l'architecture 1. Les moyens d'interconnexion 2 permettent également de transférer des flux de données entre les unités de traitement UT. Chaque unité de traitement UT comprend des processeurs de voisinage PV, une unité de contrôle UC et une unité de mémorisation de voisinage UMV. Les processeurs de voisinage PV reçoivent des instructions de l'unité de contrôle UC. Ils fonctionnent en parallèle en mode SIMD, où SIMD est le sigle de l'expression anglo-saxonne "Single Instruction Multiple Data". Autrement dit, les processeurs réalisent à un instant donné la même instruction sur des données différentes. L'unité de mémorisation de voisinage UMV agit comme une mémoire tampon pour les processeurs de voisinage PV. Elle reçoit un flux de données des moyens d'interconnexion 2 et stocke les données sous forme de voisinages de pixels. Ces voisinages de pixels correspondent aux différents masques de voisinage utilisés par l'unité de traitement UT considérée. Ils sont par exemple des voisinages carrés de dimension V x V. Le nombre V est typiquement un nombre impair, de manière à ce que le pixel central du voisinage, appelé pixel traité, soit encadré par un même nombre de pixels sur chacun de ses côtés. Chaque processeur de voisinage PV peut accéder à l'un de ces voisinages. En règle générale, l'unité de mémorisation de voisinage UMV et les processeurs de voisinage PV sont configurés de manière à ce que les processeurs de voisinage PV accèdent à des voisinages de pixels centrés sur des pixels contigus d'une même ligne de l'image. Les processeurs de voisinage PV sont reliés en sortie aux moyens d'interconnexion 2. Ils permettent de délivrer un flux de données qui peut être soit traité par une autre unité de traitement UT, soit délivré en sortie de l'architecture 1. Lorsque l'architecture de traitement 1 reçoit plusieurs flux de données en entrée, des unités de traitement distinctes sont attribuées à chaque flux de données pour permettre le traitement en parallèle des différents flux de données. Dans l'architecture 1 de la figure 1, chaque processeur de voisinage PV ne peut accéder, à un instant donné, qu'aux pixels stockés à cet instant dans le voisinage qui lui est attribué dans l'unité de mémorisation de voisinage UMV. Par conséquent, chaque processeur de voisinage PV ne peut réaliser des instructions que sur un voisinage limité de pixels. La dimension maximale du voisinage accessible par un processeur de voisinage PV est déterminée par l'unité de mémorisation de voisinage UMV, notamment par sa capacité de stockage.

L'invention permet d'étendre la dimension des masques de voisinage, c'est-à-dire des voisinages accessibles par un processeur de voisinage, par un couplage de deux unités de traitement ou plus. Elle repose essentiellement sur l'insertion de deux éléments dans l'architecture de la figure 1, à savoir un gestionnaire de mémorisation et des moyens de communication entre processeurs de voisinage voisins. Le gestionnaire de mémorisation doit permettre aux processeurs de voisinage des unités de traitement couplées d'accéder à des voisinages de pixels attenants. Les moyens de communication entre processeurs voisins doivent permettre à la fois un partage des ressources de calcul et un échange de données relatives aux traitements effectués sur les différents voisinages de pixels. En d'autres termes, le gestionnaire de mémorisation doit permettre un assemblage de voisinages et les moyens de communication entre processeurs doivent permettre un traitement global de cet assemblage de voisinages par une mise en commun de traitements locaux effectués sur les différents voisinages.

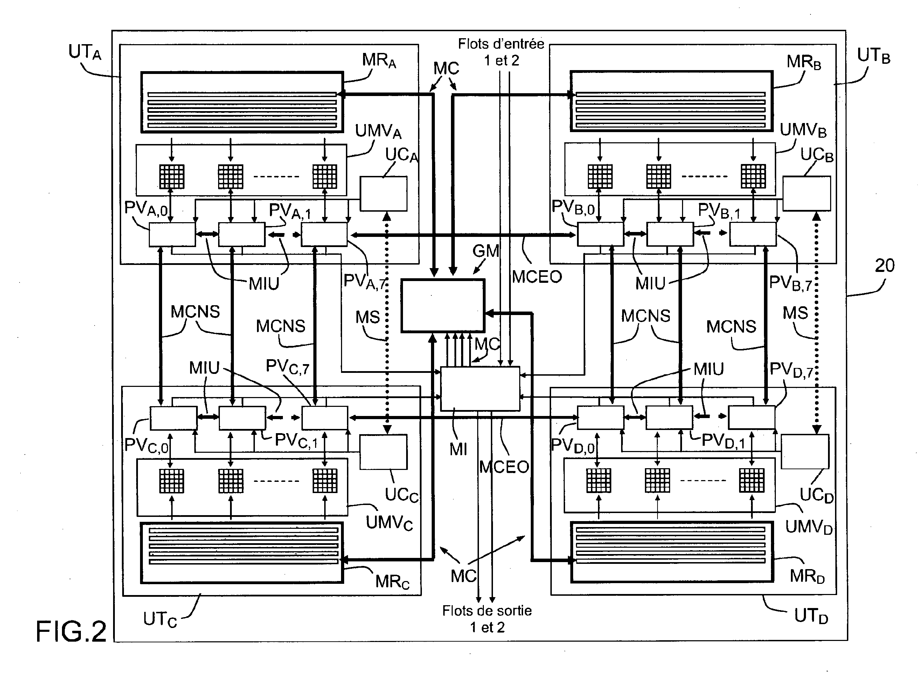

La figure 2 représente, par un synoptique, un exemple d'architecture de traitement d'un flux de données selon l'invention. L'architecture 20 comporte quatre unités de traitement UT_{A}, UT_{B}, UT_{C} et UT_{D}, notées de façon générique UT, des moyens d'interconnexion MI et un gestionnaire de mémorisation GM. Les moyens d'interconnexion MI peuvent recevoir un ou plusieurs flux de données d'entrée et délivrer un ou plusieurs flux de données de sortie correspondant respectivement aux flux de données reçus et délivrés par l'architecture 20. Dans l'exemple de la figure 2, on considère que l'architecture 20 reçoit deux flux de données et en délivre deux. Les moyens d'interconnexion MI permettent également de diriger un ou plusieurs flux de données vers le gestionnaire de mémorisation GM. Le gestionnaire de mémorisation GM comporte, pour chaque unité de traitement UT_{A}, UT_{B}, UT_{C} et UT_{D}, une mémoire de réserve MR_{A}, MR_{B}, MR_{C} et MR_{D}, respectivement, lesdites mémoires étant notées de façon générique MR. Chaque mémoire de réserve permet de stocker des données pouvant former un voisinage de pixels de dimension VI x Nc, appelé voisinage global. Lorsque le ou les flux de données forment des images de dimension NI x Nc, une mémoire de réserve MR stocke donc à chaque instant VI lignes d'une image. Cependant, les données arrivant dans une mémoire de réserve MR sous forme de flux, un voisinage global ne forme pas un voisinage cohérent à chaque instant. Autrement dit, même si une mémoire de réserve MR est physiquement organisée en VI lignes mémoire de Nc colonnes, les données ne sont pas stockées dans la mémoire de réserve MR sous forme d'une partie cohérente d'une image. Les données permettent néanmoins de former un voisinage cohérent. Les mémoires de réserve MR peuvent être regroupées au sein d'une seule mémoire physique ou, comme dans l'exemple de la figure 2, distribuées au sein de chaque unité de traitement UT. Le gestionnaire de mémorisation GM comporte, en outre, des moyens de connexion MC reliant les différentes mémoires de réserve MR entre elles et aux moyens d'interconnexion MI. Ils permettent ainsi de diriger chaque flux de données d'entrée vers une entrée de l'une des mémoires de réserve MR. Ils permettent également aux mémoires de réserve MR de stocker des données de manière à former un voisinage global étendu. En l'occurrence, un tel voisinage de pixels peut être formé d'un assemblage de voisinages globaux. Les unités de traitement UT dont les mémoires de réserve MR forment un voisinage global étendu sont dites couplées. A titre d'exemple, en considérant un couplage des unités de traitement A et C, les mémoires de réserve MR_{A} et MR_{C} peuvent stocker des données pouvant former un voisinage global étendu de dimension 2.VI x Nc. Plus généralement, les unités de traitement UT peuvent chacune être couplées à une ou deux autres unités de traitement UT selon un axe dit Nord/Sud et à une ou deux autres unités de traitement selon un axe dit Est/Ouest. Un couplage selon l'axe Nord/Sud est par exemple un couplage entre les unités de traitement UT_{A} et UT_{C} ou entre les unités de traitement UT_{B} et UT_{D}. Un couplage selon l'axe Est/Ouest est par exemple un couplage entre les unités de traitement UT_{A} et UT_{B} ou entre les unités de traitement UT_{C} et UT_{D}. Dans une architecture comportant K.M unités de traitement UT organisées en matrice de K unités de traitement UT couplées deux à deux selon l'axe Nord/Sud et M unités de traitement UT couplées deux à deux selon l'axe Est/Ouest, les mémoires de réserve peuvent stocker des données pouvant former un voisinage global étendu de dimension maximale K.VI x M.Nc. Ce voisinage est également appelé voisinage couplé. Chaque unité de traitement UT comporte une unité de contrôle UC, des processeurs de voisinage PV fonctionnant en mode SIMD et une unité de mémorisation de voisinages UMV. Dans l'exemple de la figure 2, chaque unité de traitement UT_{A} à UT_{D} comporte huit processeurs de voisinage, notés PV_{A,0} à PV_{A,7} pour l'unité de traitement UT_{A}, PV_{B,0} à PV_{B,7} pour l'unité de traitement UT_{B}, PV_{C,0} à PV_{C,7} pour l'unité de traitement UT_{C}, et PV_{D,0} à PV_{D,7} pour l'unité de traitement UT_{D}. L'unité de mémorisation de voisinages UMV permet à chaque processeur de voisinage PV d'accéder directement à un voisinage de pixels de dimension VI x Vc à partir des données contenues dans la mémoire de réserve MR associée à l'unité de traitement UT considérée. Les voisinages de pixels accessibles par les processeurs sont des voisinages cohérents, c'est-à-dire qu'ils correspondent à des parties d'image. Ils sont centrés sur des pixels contigus d'une même ligne de l'image. Ainsi, à chaque instant, tout un bloc de pixels peut être traité simultanément par les processeurs de voisinage PV. On dit que deux processeurs PV sont voisins lorsque les voisinages de pixels auxquels ils peuvent accéder sont centrés sur des pixels contigus d'une même ligne d'une image. En l'occurrence, les processeurs de voisinage PV d'une même unité de traitement UT sont voisins deux à deux. Une unité de mémorisation de voisinages UMV peut consister en des mémoires physiques stockant les différents voisinages de pixels. Elle peut également consister en des moyens d'accès à la mémoire de réserve MR. Chaque unité de traitement UT comporte en outre des moyens de connexion intra-unité MIU reliant ses processeurs voisins PV en série. En d'autres termes, au sein de chaque unité de traitement UT, chaque processeur de voisinage PV est relié à son ou ses processeurs de voisinage PV voisins. Sur la figure 2, le processeur de voisinage PV_{A,0} est relié au processeur de voisinage PV_{A,1}, lequel est également relié au processeur de voisinage PV_{A,2}, et ainsi de suite jusqu'au processeur de voisinage PV_{A,6} qui est relié aux processeurs de voisinage PV_{A,5} et PV_{A,7}. Les moyens de connexion intra-unité MIU permettent à deux processeurs voisins PV d'échanger des données entre eux. Ainsi, le voisinage de pixels accessible par un processeur de voisinage PV peut être étendu à l'ensemble des voisinages de pixels accessibles par les processeurs de voisinage PV de l'unité de traitement UT considérée. Lorsque deux unités de traitement UT sont couplées selon l'axe Est/Ouest, l'architecture 20 comporte également des moyens de connexion selon l'axe Est/Ouest entre les processeurs de voisinage voisins de ces unités. Ces moyens de connexion interunité, appelés moyens de connexion Est/Ouest MCEO, permettent à ces processeurs de voisinage d'échanger des données entre eux. Le voisinage de pixels accessible par l'un des processeurs de voisinage PV est alors étendu au voisinage de pixels accessible par le processeur de voisinage PV voisin. Sur la figure 2, l'unité de traitement UT_{A} est couplée à l'unité de traitement UT_{B}. Les processeurs de voisinage PV_{A,7} et PV_{B,0} sont alors reliés par des moyens de connexion Est/Ouest MCEO. De même, l'unité de traitement UT_{C} est couplée à l'unité de traitement UT_{D}. Les processeurs de voisinage PV_{C,7} et PV_{D,0} sont alors reliés par des moyens de connexion Est/Ouest MCEO. Lorsque deux unités de traitement UT sont couplées selon l'axe Nord/Sud, l'architecture 20 comporte des moyens de connexion selon l'axe Nord/Sud entre les processeurs de ces unités. Chaque processeur de voisinage PV d'une unité de traitement UT est relié à l'un des processeurs de voisinage PV de l'autre unité de traitement UT, les processeurs de voisinage étant reliés deux à deux de manière à avoir accès à des voisinages de pixels centrés sur une même colonne d'une image. Deux processeurs de voisinage PV ainsi reliés sont dits voisins selon l'axe Nord/Sud. Les moyens de connexion entre processeurs voisins, appelés moyens de connexion Nord/Sud MCNS, permettent à chaque couple de processeurs de voisinage voisins selon l'axe Nord/Sud, d'échanger des données entre eux. Le voisinage de pixels accessible par l'un des processeurs de voisinage PV est alors étendu au voisinage de pixels accessible par son processeur de voisinage PV voisin. Sur la figure 2, l'unité de traitement UT_{A} est couplée à l'unité de traitement UT_{C}. Les processeurs de voisinage PV_{A,0} à PV_{A,7} sont alors respectivement reliés aux processeurs de voisinage PV_{C,0} à PV_{C,7} par des moyens de connexion Nord/Sud MCNS. De même, l'unité de traitement UT_{B} est couplée à l'unité de traitement UT_{D}. Les processeurs de voisinage PV_{B,0} à PV_{B,7} sont alors respectivement reliés aux processeurs de voisinage PV_{D,0} à PV_{D,7} par des moyens de connexion Nord/Sud MCNS. Bien entendu, deux unités de traitement UT reliées selon l'axe Nord/Sud doivent comporter le même nombre de processeurs de voisinage PV. Cependant, il n'est pas nécessaire que toutes les unités de traitement UT d'une architecture selon l'invention comportent le même nombre de processeurs de voisinage PV.

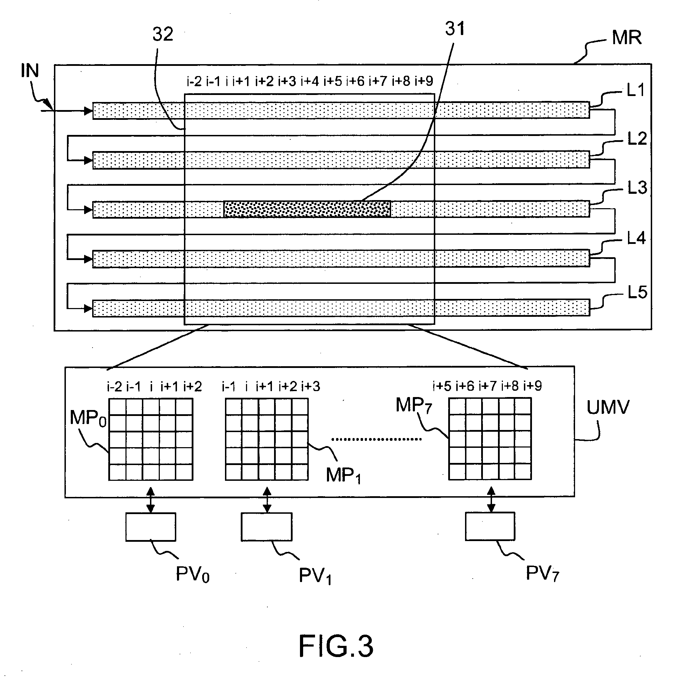

La figure 3 illustre le principe de fonctionnement d'une mémoire de réserve MR et d'une unité de mémorisation de voisinages UMV. La mémoire de réserve MR comporte une entrée IN et cinq lignes mémoire L1 à L5 chacune apte à stocker des données d'une ligne d'une image. L'entrée IN est reliée à la première ligne mémoire L1 et les lignes mémoire L1 à L5 sont reliées en série, de sorte qu'un flux de données reçu sur l'entrée IN est successivement transmis aux lignes mémoire L1 à L5. Ainsi, à chaque instant, la mémoire de réserve MR contient des données pouvant former un voisinage global de dimension 5 x Nc. Pour la suite de la description de la figure 3, on considère un instant donné pour lequel les données stockées dans les colonnes i-2 à i+9 de la mémoire de réserve MR forment un voisinage de pixels cohérent, autrement dit forment une partie d'une image. Cette hypothèse présente l'intérêt de simplifier l'explication du fonctionnement d'une unité de mémorisation de voisinages UMV mais ne limite pas l'invention à une telle configuration. L'unité de mémorisation de voisinages UMV permet au processeur PV₀ d'accéder aux pixels des colonnes i-2 à i+2 de la mémoire de réserve MR. Elle permet au processeur PV₁ d'accéder aux pixels des colonnes i-1 à i+3, et ainsi de suite jusqu'au processeur PV₇ qui peut accéder aux pixels des colonnes i+5 à i+9. Les voisinages de pixels accessibles par les processeurs de voisinage PV sont ainsi centrés sur les pixels de la troisième ligne (L3) et des colonnes i à i+7 de la mémoire de réserve MR. Ces pixels sont généralement appelés les pixels traités. Ils sont repérés 31 sur la figure 3. L'ensemble des pixels accessibles par au moins un processeur de voisinage PV forme un voisinage de dimension 5 x 12, repéré 32 sur la figure 3. Lorsqu'une unité de mémorisation de voisinages UMV comprend des mémoires physiques MP (notées MP₀ à MP₇ sur la figure 3), celles-ci peuvent être remplies par simple lecture de la mémoire de réserve MR aux colonnes correspondantes. Les mémoires physiques MP de l'unité de mémorisation MR contiennent globalement le voisinage de dimension 5 x 12. Si les données stockées dans la mémoire de réserve MR ne forment pas un voisinage cohérent, il reste néanmoins possible de remplir les mémoires physiques MP de l'unité de mémorisation de voisinages UMV par lecture de la mémoire de réserve MR aux lignes et aux colonnes adéquates. De même, lorsqu'une unité de mémorisation de voisinages UMV ne contient pas de mémoires physiques mais des moyens d'accès, ces derniers peuvent être configurés pour donner aux processeurs de voisinage PV accès à la mémoire de réserve MR aux lignes et aux colonnes adéquates. Bien entendu, dans une architecture de traitement d'un flux de données selon l'invention, chaque mémoire de réserve peut contenir un nombre différent de lignes mémoire et toutes les lignes mémoire ne sont pas forcément utilisées. Chaque ligne mémoire peut être utilisée partiellement, et on peut coupler des lignes mémoires pour stocker des lignes images plus grandes.

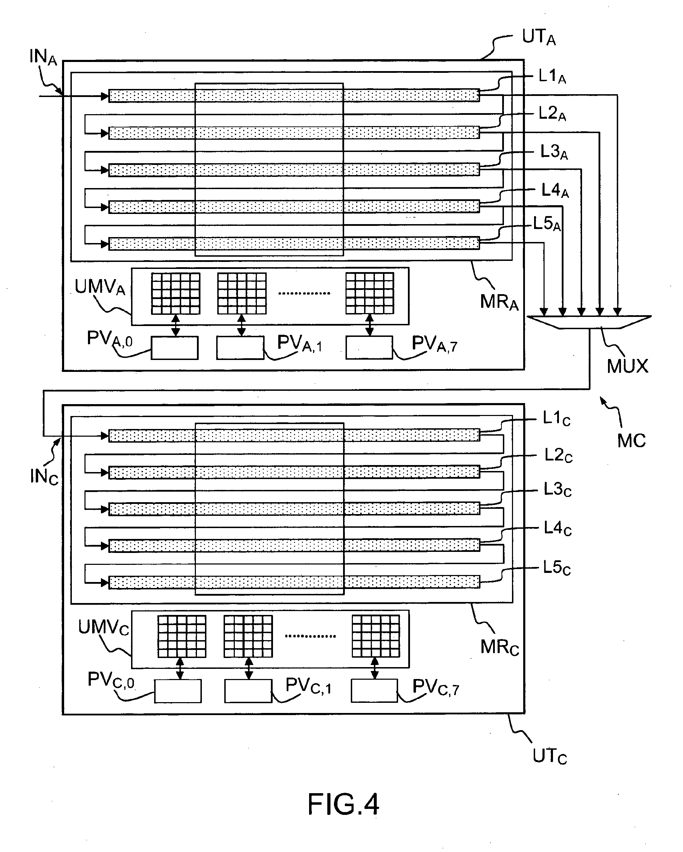

La figure 4 illustre le principe de fonctionnement des mémoires de réserve MR_{A} et MR_{C} et des unités de mémorisation de voisinages UMV_{A} et UMV_{C} de deux unités de traitement UT_{A} et UT_{C} couplées selon l'axe Nord/Sud. Chaque mémoire de réserve MR_{A} ou MR_{C} permet de stocker des données formant un voisinage de dimension 5 x Nc. Les moyens de connexion MC du gestionnaire de mémorisation GM sont configurés pour délivrer un flux de données sur l'entrée IN_{A} de la mémoire de réserve MR_{A} et pour relier une sortie de l'une des lignes mémoire L1_{A} à L5_{A} de la mémoire de réserve MR_{A} à l'entrée IN_{C} de la mémoire de réserve MR_{C}. La configuration des moyens de connexion MC, notamment la sélection de la ligne mémoire à relier à l'entrée IN_{C}, est faite en fonction du nombre de lignes de pixels requises pour former le voisinage global étendu. Pour sélectionner l'une des lignes mémoire L1_{A} à L5_{A}, les moyens de connexion MC comportent par exemple un multiplexeur MUX comprenant cinq entrées reliées aux sorties des lignes mémoire L1_{A} à L5_{A} et une sortie reliée à l'entrée IN_{C}. Selon une première configuration, la ligne mémoire L1_{A} est sélectionnée pour réinjecter ses données dans la mémoire de réserve MR_{C}. Il est alors possible d'obtenir un voisinage global étendu de dimension 6 x Nc, et d'utiliser des masques de voisinage carrés de dimension maximale 6 x 6. Dans cette première configuration, les lignes mémoire L2_{A} à L5_{A} sont respectivement identiques aux lignes mémoire L1_{C} à L4_{C}. Les données redondantes de ces lignes peuvent être utilisées soit par les processeurs de voisinage d'une seule unité de traitement UT_{A} ou UT_{C}, soit par les processeurs de voisinage des deux unités de traitement UT_{A} et UT_{C}, par exemple pour effectuer des traitements différents. Selon une deuxième configuration, la ligne mémoire L2_{A} est sélectionnée. Il est alors possible d'obtenir un voisinage global étendu de dimension 7 x Nc, et d'utiliser des masques de voisinage de dimension maximale 7 x 7. Dans cette deuxième configuration, les lignes mémoire L3_{A} à L5_{A} sont respectivement identiques aux lignes mémoire L1_{C} à L3_{C}. Selon une cinquième configuration, la ligne mémoire L5_{A} est sélectionnée. Il est alors possible d'obtenir un voisinage global étendu de dimension 10 x Nc, et d'utiliser ainsi des masques de voisinage de dimension maximale 10 x 10. En pratique, chaque processeur de voisinage PV_{A,0} à PV_{A,7} et PV_{C,0} à PV_{C,7} ne peut accéder, directement, qu'au voisinage de pixels rendu accessible par l'unité de mémorisation de voisinages UMV_{A} ou UMV_{C}. En l'occurrence, chaque processeur de voisinage n'accède directement qu'à un voisinage de pixels de dimension 5 x 5. Cependant, un processeur de voisinage peut accéder à l'ensemble des voisinages de pixels accessibles par les processeurs de voisinage PV_{A,0} à PV_{A,7} et PV_{C,0} à PV_{C,7}, par l'intermédiaire des moyens de connexion intra-unité MIU et des moyens de connexion Nord/Sud MCNS. De manière générale, un processeur de voisinage peut accéder à l'ensemble des voisinages de pixels accessibles par les processeurs de voisinage de l'unité de traitement à laquelle il appartient, par l'intermédiaire des moyens de connexion intra-unité MIU, ainsi qu'à l'ensemble des voisinages de pixels accessibles par les processeurs de voisinage des unités de traitement couplées à l'unité de traitement considérée, par l'intermédiaire des moyens de connexion Est/Ouest MCEO et Nord/Sud MCNO.

Selon une forme particulière de réalisation, les moyens de connexion intra-unité MIU, les moyens de connexion Est/Ouest MCEO et les moyens de connexion Nord/Sud MCNS comportent, pour chaque processeur de voisinage appartenant à une unité de traitement couplée, des registres spécialisés pour chaque direction de communication Nord, Sud, Est et Ouest. Les registres spécialisés peuvent n'exister que pour certaines directions de communication, en fonction des couplages nécessaires. Les processeurs de voisinage peuvent accéder à ces registres spécialisés soit par le biais d'un adressage spécifique, soit par des instructions spécifiques. A titre d'exemple, les instructions spécifiques peuvent être de la forme « MOVE_V dir reg_dest ». Pour chaque processeur de voisinage exécutant cette instruction, les données se situant dans un registre spécialisé de son processeur voisin dans la direction « dir » sont lues et écrites dans un registre « reg_dest » du processeur de voisinage considéré.

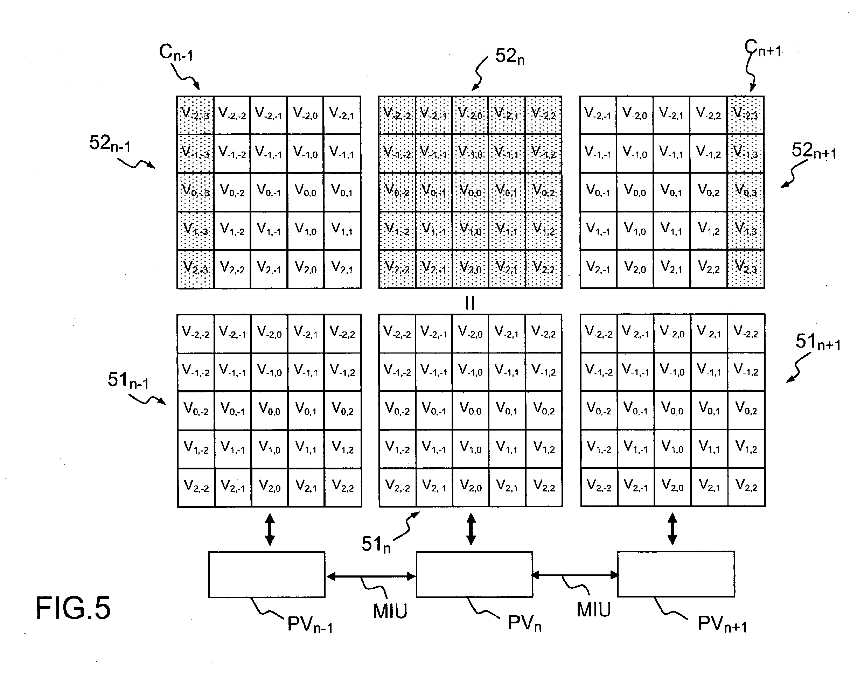

La figure 5 illustre le rôle des moyens de connexion intra-unité MIU pour l'extension d'un masque de voisinage. On considère trois processeurs de voisinage PVₙ₋₁, PVₙ et PVₙ₊₁ reliés en série par des moyens de connexion intra-unité MIU. Chaque processeur de voisinage peut accéder directement à un voisinage de pixels de dimension 5 x 5. On note V_{i,j} l'adresse d'un pixel vu par un processeur de voisinage avec i référençant la ligne et j référençant la colonne par rapport au pixel central du voisinage directement accessible par le processeur de voisinage. Ainsi, V_{0,0} fait référence au pixel central ou pixel traité du masque de voisinage. V_{-2,-2} fait référence à la donnée se situant deux lignes au-dessus et deux colonnes à gauche dans le voisinage de pixels. Sur la figure 5, les adresses des pixels accessibles par les processeurs de voisinage PVₙ₋₁, PVₙ et PVₙ₊₁ sont notées relativement à chaque processeur de voisinage PVₙ₋₁, PVₙ et PVₙ₊₁ dans des tableaux 51ₙ₋₁, 51ₙ et 51ₙ₊₁, respectivement, et relativement au processeur de voisinage PVₙ dans des tableaux 52ₙ₋₁, 52ₙ et 52ₙ₊₁, respectivement. Les adresses des pixels sont identiques dans les tableaux 51ₙ et 52ₙ. Les processeurs de voisinage PVₙ₋₁, PVₙ et PVₙ₊₁ ayant accès à des voisinages de pixels centrés sur des pixels contigus d'une même ligne d'une image, le voisinage accessible par chaque processeur de voisinage est en partie recouvert par le voisinage accessible par chaque processeur de voisinage voisin. Par exemple, le pixel adressé V_{0,0} pour le processeur de voisinage PVₙ correspond au pixel adressé V_{0,1} pour le processeur de voisinage PVₙ₋₁ et au pixel adressé V_{0,-1} pour le processeur de voisinage PVₙ₊₁. Ainsi, les moyens de connexion intra-unité MIU permet à chaque processeur de voisinage d'accéder indirectement à des colonnes de pixels supplémentaires. En l'occurrence, le processeur de voisinage PVₙ peut accéder à une colonne supplémentaire dans la direction Ouest Cₙ₋₁ grâce au processeur de voisinage PVₙ₋₁ et à une colonne supplémentaire dans la direction Est Cₙ₊₁ grâce au processeur de voisinage PVₙ₊₁. Le nombre de colonnes de pixels accessibles indirectement est proportionnel au nombre de processeurs de voisinage au sein de l'unité de traitement.

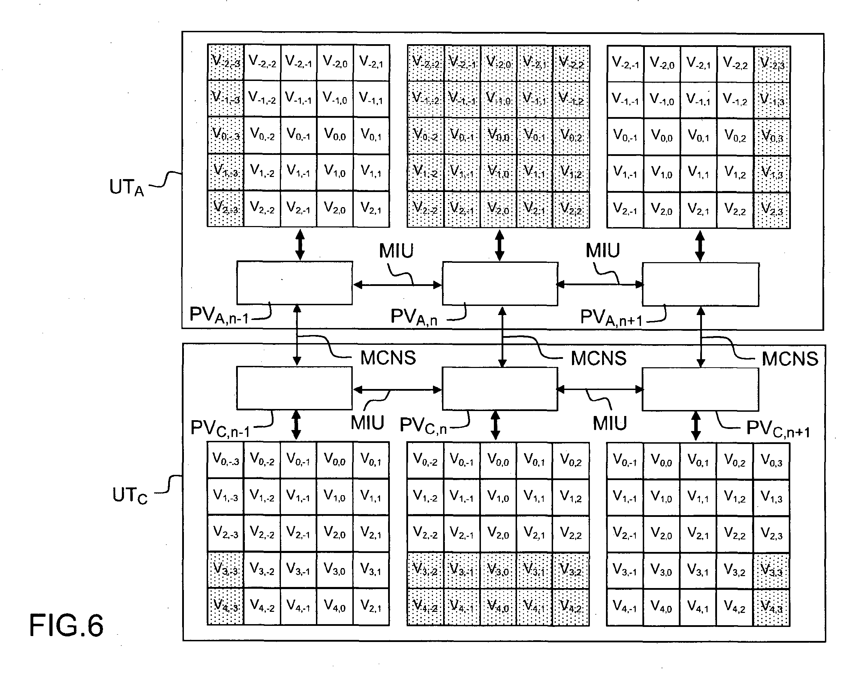

La figure 6 illustre le rôle des moyens de connexion intra-unité MIU et des moyens de connexion Nord/Sud MCNS pour l'extension d'un masque de voisinage. On considère les unités de traitement UT_{A} et UT_{C,} couplées selon la deuxième configuration décrite en référence à la figure 4, c'est-à-dire pour un voisinage global étendu de dimension 7 x Nc. Les unités de traitement UT_{A} et UT_{C} comportent chacune trois processeurs de voisinage PV_{A,n-1}, PV_{A,n}, PV_{A,n+1}, PV_{C,n-1}, PV_{C,n} et PV_{C,n+1}, reliés en série au sein de chaque unité de traitement par des moyens de connexion intra-unité MIU. Sur la figure 6 ne sont représentés que trois processeurs de voisinage par unité de traitement. Les unités de traitement UT_{A} et UT_{C} pourraient néanmoins en comporter un plus grand nombre. Chaque processeur de voisinage peut accéder directement à un voisinage de pixels de dimension 5 x 5. Les adresses des pixels accessibles par les processeurs de voisinage sont notées V_{i,j}, relativement au processeur de voisinage PV_{A,n}. Des moyens de connexion Nord/Sud MCNS relient le processeur PV_{A,n-1} au processeur PV_{C,n-1}, le processeur PV_{A,n} au processeur PV_{C,n} et le processeur PV_{A,n+1} au processeur PV_{C,n+1}. Ils permettent aux processeurs de l'unité de traitement UT_{A} d'accéder à deux lignes supplémentaires dans la direction Sud, et aux processeurs de l'unité de traitement UT_{C} d'accéder à deux lignes supplémentaires dans la direction Nord. En considérant à la fois les moyens de connexion intra-unité MIU et les moyens de connexion Nord/Sud MCNS, chaque processeur de voisinage peut ainsi accéder à un voisinage de pixels de dimension 7 x 7. Le pixel central du voisinage de pixels accessibles directement ou indirectement par le processeur de voisinage PV_{A,n} correspond ici au pixel adressé V_{1,0}.

Pour la suite de la description, on considère à titre d'exemple illustratif une opération de convolution réalisée sur des voisinages de pixels de dimension 7 x 7 avec le noyau de convolution suivant :
1001001
0000000
0000000
1001001
0000000
0000000
1001001

Autrement dit, en considérant que le pixel central d'un voisinage sur lequel est effectuée l'opération de convolution est noté V_{1,0}, il faut réaliser l'opération (V_{-2,-3} + V_{-2,0} + V_{-2,3} + V_{1,-3} + V_{1,0} + V_{1,3} + V_{4,-3} + V_{4,0} + V_{4,3})/9. Cette opération peut être effectuée pour différents voisinages par les unités de traitement UT_{A} et UT_{C} couplées selon l'axe Nord/Sud conformément à la configuration décrite en référence à la figure 6. On considère, pour chaque processeur de voisinage PV_{A,n-1}, PV_{A,n}, PV_{A,n+1}, PV_{C,n-1}, PV_{C,n} et PV_{C,n+1}, des registres généraux R1, R2, R3 permettant de stocker des données pour le processeur de voisinage considéré, et des registres spécialisés RO, RE, RNS permettant de stocker des données accessibles par ses processeurs de voisinage voisins Ouest, Est et Nord/Sud, respectivement. Les processeurs de voisinage peuvent comporter des registres distincts pour les communications dans les directions Nord et Sud. Cependant, seules deux unités de traitement UT_{A} et UT_{C} étant couplées selon l'axe Nord/Sud dans le présent exemple, un seul registre spécialisé pour les deux directions Nord et Sud est suffisant. On considère également que chaque processeur de voisinage peut accéder aux registres spécialisés de ses processeurs voisins par les instructions « MOVE_V dir reg_dest » présentées ci-dessus. Les lignes suivantes présentent un exemple de code pouvant être exécuté par les unités de traitement UT_{A} et UT_{C} pour réaliser l'opération de convolution. Les lignes de code débutant par deux tirets (--) sont des commentaires permettant de suivre l'avancement de l'opération.

### UT A

RE = V(-2,-2) + V(1,-2)
-- RE(PVAn) = V_{-2,-2} + V_{1,-2}
-- (ie) RE (PVAn-1) = V_{-2,-3} + V_{1,-3}
RO = V(-2,2) + V(1,2)
-- RO (PVAn) = V_{-2,2} + V_{1,2}
-- RO (PVAn+1) = V_{-2,3} + V_{1,3}
MOVE_V Ouest R1
-- R1 (PVAn) = RE (PVAn-1) = V_{-2,-3} + V_{1,-3}
MOVE_V Est R2
-- R2(PVAn) = RO (PVAn+1) = V_{-2,3} + V_{1,3}
R3 = R1 + R2
-- R3 (PVAn) = V_{-2,-3} + V_{1,-3} + V_{-2,3} + V_{1,3}
R3 = R3 + V (-2, 0)
-- R3 (PVan) = V_{-2,-3} + V_{1,-3} + V_{-2,3} + V_{1,3} + V_{-2,0}
R3 = R3 + V (1,0)
-- R3 (PVAn) = V_{-2,-3} + V_{1,-3} + V_{-2,3} + V_{1,3} + V_{-2,0} + V_{1,0}
MOVE_V Sud R2
-- R2 (PVAn) = RNS (PVCn) = V_{4,-3} + V_{4,3} + V_{4,0}
R3 = R3 + R2
-- R3 (PVAn) = V_{-2,-3} + V_{1,-3} + V_{-2,3} + V_{1,3} + V_{-2,0} + V_{1,0} + V_{4,-3} + V_{4,3} + V_{4,0}
R3 = R3/9
-- R3 (PVAn) = (V_{-2,-3} + V_{1,-3} + V_{-2,3} + V_{1,3} + V_{-2,0} + V_{1,0} + V_{4,-3} + V_{4,3} +
V_{4,0})/9

### UT C

RE = V(2,-2)
-- RE(PVCn) = V_{2,-2}
-- (ie) RE (PVCn-1) = V_{4,-3}
RO = V(2,2)
-- RO(PVCn) = V_{2,2}
-- RO (PVCn+1) = V_{4,3}
MOVE_V Ouest R1
-- R1 (PVCn) = RE (PVCn-1) = V_{4,-3}
MOVE_V Est R2
-- R2(PVCn) = RO (PVCn+1) = V_{4,3}
R3 = R1 + R2
-- R3(PVCn) = V_{4,-3} + V_{4,3}
RNS = R3 + V (2, 0)
-- RNS(PVCn) = V_{4,-3} + V_{4,3} + V_{4,0}

Dans l'exemple ci-dessus, ce sont les processeurs de voisinage PV_{A,n-1}, PV_{A,n} et PV_{A,n+1} qui contiennent les résultats finaux des opérations de convolution. Le flot de données de sortie correspondant aux opérations de convolution est donc généré par l'unité de traitement UT_{A}. L'unité de traitement UT_{C} ne génère pas de flot de données de sortie dans cet exemple, mais est seulement utilisée par l'unité de traitement UT_{A} pour ses ressources de calcul et de mémorisation ainsi que pour l'accès à ses voisinages de pixels. Cet exemple montre que le couplage selon l'axe Nord/Sud permet non seulement de supporter des traitements nécessitant des masques de voisinage étendus, mais qu'il permet en plus d'augmenter la capacité de calcul sur ce masque de voisinage puisque les ressources de calcul des deux unités de traitement sont utilisées.

Le code présenté en exemple ci-dessus illustre le fait que lors de la programmation d'unités de traitement couplées selon l'axe Nord/Sud, il est nécessaire de s'assurer que les données récupérées par les processeurs de voisinage d'une première unité de traitement ont bien été mises à disposition par les processeurs de voisinage d'une deuxième unité de traitement. Dans l'exemple précédent, il s'agit de vérifier que les registres RNS des processeurs de voisinage PV_{C,n-1}, PV_{C,n} et PV_{C,n+1} contiennent bien les résultats des opérations V_{4,-3} + V_{4,3} + V_{4,0} lors de la lecture de ces registres par les processeurs de voisinage PV_{A,n-1}, PV_{A,n} et PV_{A,n+1}. Autrement dit, il s'agit de vérifier que la dernière instruction exécutée par les processeurs de voisinage de l'unité de traitement UT_{C} le soit avant d'exécuter l'instruction « MOVE_V Sud R2 ». Afin de relâcher cette contrainte de programmation, l'architecture de traitement selon l'invention peut comporter des moyens de synchronisation des unités de traitement couplées selon l'axe Nord/Sud ou Est/Ouest. Sur la figure 2, les moyens de synchronisation, notés MS, sont représentés sous la forme de moyens de communication entre les unités de contrôle UC des unités de traitement couplées selon l'axe Nord/Sud. Ces moyens de synchronisation sont par exemple réalisés par l'intermédiaire de drapeaux, généralement appelés "flags" dans le domaine informatique. Les moyens de synchronisation peuvent comporter un flag pour chaque couplage possible ou effectif entre deux unités de traitement UT couplées selon l'axe Nord/Sud ou Est/Ouest. Matériellement, les flags peuvent être implémentés sous la forme d'un ou plusieurs registres d'état, chaque bit de ce ou ces registres étant associé à un couplage selon l'axe Nord/Sud ou Est/Ouest entre deux unités de traitement UT. Chaque bit est accessible en lecture et en écriture par les unités de contrôle UC des unités de traitement couplées. Il peut prendre deux valeurs, une première, par exemple "1", pour indiquer que les données sont disponibles et une deuxième valeur, par exemple "0", pour indiquer que les données ne sont pas disponibles. La synchronisation des unités de traitement est gérée par une communication de type "poignée de main" ou "handshake" selon l'expression anglo-saxonne. Ainsi, lorsque les processeurs de voisinage d'une première unité de traitement doivent récupérer des données stockées dans les processeurs de voisinage d'une deuxième unité de traitement couplée à la première dans la direction Nord, Sud, Est ou Ouest, l'unité de contrôle de la première unité de traitement doit interroger, c'est-à-dire lire, la position du flag correspondant. Si le flag indique que les données sont disponibles, alors les données peuvent être lues, par exemple au moyen des instructions « MOVE_V Sud » ou « MOVE_V Nord ». Le flag est alors repositionné dans la position indiquant que les données ne sont pas disponibles, en écrivant la valeur correspondante dans le bit correspondant. En revanche, si le flag indique que les données ne sont pas disponibles, alors les processeurs de voisinage de la première unité de traitement doivent attendre avant de lire les données de la deuxième unité de traitement. Ils peuvent soit être bloqués, c'est-à-dire ne pas exécuter d'instruction, jusqu'à ce que le flag soit positionné dans la position indiquant que les données sont disponibles, soit exécuter d'autres instructions, l'unité de contrôle de la première unité de traitement interrogeant à nouveau la position du flag à la fin de l'exécution de ces instructions.

Le code présenté précédemment est repris ci-après avec une synchronisation par drapeau. Le drapeau utilisé dans cet exemple est nommé F1. Il indique que les données présentes dans les registres RNS des processeurs de voisinage PV_{C,n-1}, PV_{C,n} et PV_{C,n+1} sont disponibles. L'interrogation sur son positionnement est réalisée par une instruction « CHECK_FLAG flag », où « flag » désigne un drapeau. Le positionnement d'un drapeau « flag » est réalisé par une instruction « SET_FLAG flag val », où « val » prend la valeur "0" ou "1 ". Dans notre exemple, les valeurs "1" et "0" indiquent respectivement que les données sont et ne sont pas disponibles.

### UT A

RE = V(-2,-2) + V(1,-2)
-- RE (PVAn) = V_{-2,-2} + V_{1,-2}
-- (ie) RE (PVAn-1) = V_{-2,-3} + V_{1,-3}
RO = V(-2,2) + V(1,2)
-- RO (PVAn) = V_{-2,2} + V_{1,2}
-- RO(PVAn+1) = V_{-2,3} + V_{1,3}
MOVE_V Ouest R1
-- R1 (PVAn) = RE(PVAn-1) = V_{-2,-3} + V_{1,-3}
MOVE_V Est R2
-- R2 (PVAn) = RO(PVAn+1) = V_{-2,3} + V_{1,3}
R3 = R1 + R2
-- R3 (PVAn) = V_{-2,-3} + V_{1,-3} + V_{-2,3} + V_{1,3}
R3 = R3 + V(-2, 0)
-- R3(PVan) = V_{-2,-3} + V_{1,-3} + V_{-2,3} + V_{1,3} + V_{-2,0}
R3 = R3 + V(1,0)
-- R3 (PVAn) = V_{-2,-3} + V_{1,-3} + V_{-2,3} + V_{1,3} + V_{-2,0} + V_{1,0}
CHECK_FLAG F1
-- Vérification que le drapeau F1 est positionné à la valeur "1" avant de poursuivre
MOVE_V Sud R2
-- R2 (PVAn) = RNS (PVCn) = V_{4,-3} + V_{4,3} + V_{4,0}
SET_FLAG F1 0
-- Le drapeau F1 est repositionné à la valeur "0"
R3 = R3 + R2
-- R3 (PVAn) = V_{-2,-3} + V_{1,-3} + V_{-2,3} + V_{1,3} + V_{-2,0} + V_{1,0} + V_{4,-3} + V_{4,3} + V_{4,0}
R3 = R3/9
-- R3 (PVAn) = (V_{-2,-3} + V_{1,-3} + V_{-2,3} + V_{1,3} + V_{-2,0} + V_{1,0} + V_{4,-3} + V_{4,3} + V_{4,0})/9

### UT C

RE = V(2,-2)
-- RE(PVCn) = V_{2,-2}
-- (ie) RE(PVCn-1) = V_{4,-3}
RO = V(2,2)
-- RO(PVCn) = V_{2,2}
-- RO(PVCn+1)= V_{4,3}
MOVE_V Ouest R1
-- R1(PVCn) = RE(PVCn-1) = V_{4,-3}
MOVE_V Est R2
-- R2(PVCn) = RO(PVCn+1) = V_{4,3}
R3 = R1 + R2
-- R3 (PVCn) = V₄,-₃ + V_{4,3}
RNS = R3 + V(2,0)
-- RNS (PVCn) = V₄,-₃ + V_{4,3} + V_{4,0}
SET_FLAG F1 1
-- La valeur est disponible

L'exemple ci-dessus permet de mettre en évidence le fait que les registres RNS des processeurs de voisinage PV_{C,n-1}, PV_{C,n} et PV_{C,n+1} ne sont lus que lorsque le drapeau F1 indique que les données de ces registres sont disponibles.

## Revendications

1. Architecture de traitement d'un flux de données, les données formant des matrices de pixels de dimension Nl x Nc, l'architecture (20) comprenant :
- des unités de traitement (UT), chaque unité de traitement (UT) étant apte à recevoir un flux de données en entrée et à délivrer un flux de données en sortie, et
- des moyens d'interconnexion (MI) aptes à recevoir un flux de données en entrée de l'architecture (20) et les flux de données en sortie des unités de traitement (UT), et aptes à délivrer un flux de données en sortie de l'architecture (20),
chaque unité de traitement (UT) comportant :
■ une unité de contrôle (UC) apte à fournir des instructions,
■ un ensemble de processeurs de voisinage (PV) aptes à réaliser les instructions reçues de l'unité de contrôle (UC) et à fournir des données formant le flux de données en sortie de l'unité de traitement (UT), et
■ une unité de mémorisation de voisinages (UMV) permettant à chaque processeur de voisinage (PV) d'accéder à des données du flux reçu par l'unité de traitement (UT) formant un voisinage de pixels de dimension Vl x Vc, les voisinages accessibles par les processeurs étant centrés sur des pixels contigus d'une même ligne d'une matrice, deux processeurs étant voisins lorsque les voisinages auxquels ils peuvent accéder sont centrés sur des pixels contigus d'une même ligne d'une matrice,
**caractérisée en ce que** deux unités de traitement (UT_{A}, UT_{C}) peuvent être couplées selon un axe Nord/Sud et comportent chacune :
- un même nombre N de processeurs de voisinage (PV_{A,0}-PV_{A,7}, PV_{C,0}-PV_{C,7}),
- des moyens de connexion intra-unité (MIU) permettant à chaque processeur de voisinage (PV_{A,0}-PV_{A,7}, PV_{C,0}-PV_{C,7}) d'échanger des données avec chacun de ses processeurs voisins, de sorte que le voisinage de pixels accessible par un processeur de voisinage puisse être étendu à l'ensemble des voisinages de pixels accessibles par les processeurs de voisinage (PV_{A,0}-PV_{A,7}, PV_{C,0}-PV_{C,7}) de l'unité de traitement couplée (UT_{A}, UT_{C}) considérée, ledit ensemble formant un voisinage de pixels de dimension VI x (Vc+N-1),
l'architecture (20) comportant, en outre :
- un gestionnaire de mémorisation (GM) apte à recevoir un flux de données des moyens d'interconnexion (MI) et permettant aux processeurs de voisinage (PV_{C,0}-PV_{C,7}) d'une première unité de traitement couplée (UT_{C}) d'accéder à des voisinages de pixels contigus avec les voisinages de pixels accessibles par les processeurs de voisinage (PV_{A,0}-PV_{A,7}) d'une deuxième unité de traitement couplée (UT_{A}), de sorte que les voisinages de pixels accessibles par les processeurs de voisinage des deux unités de traitement couplées (UT_{A}, UT_{C}) puissent former un voisinage de dimension 2.Vl x (Vc+N-1), et
- des moyens de connexion selon l'axe Nord/Sud (MCNS) permettant à chaque processeur de voisinage (PV_{C,0}-PV_{C,7}) de la première unité de traitement couplée (UT_{C}) d'échanger des données avec l'un des processeurs de voisinage (PV_{A,0}-PV_{A,7}) de la deuxième unité de traitement couplée (UT_{A}), les processeurs de voisinage étant reliés deux à deux de manière à avoir accès à des voisinages de pixels centrés sur une même colonne d'une matrice, de sorte que le voisinage de pixels accessible par chaque processeur de voisinage (PV_{A,0}-PV_{A,7}, PV_{C,0}-PV_{C,7}) puisse être étendu aux voisinages de pixels accessibles par le processeur de voisinage auquel il est relié.

2. Architecture selon la revendication 1, dans laquelle le gestionnaire de mémorisation (GM) comporte :
■ une mémoire de réserve (MR_{A}, MR_{C}) pour chaque unité de traitement (UT_{A}, UT_{C}) couplée selon l'axe Nord/Sud, chaque mémoire de réserve (MR_{A}, MR_{C}) étant apte à stocker des données du flux reçu par l'unité de traitement (UT_{A}, UT_{C}) considérée pouvant former un voisinage global de pixels de dimension Vl x Nc, l'unité de mémorisation de voisinages (UMV_{A}, UMV_{C}) de chaque unité de traitement couplée (UT_{A}, UT_{C}) permettant à chacun de ses processeurs de voisinage (PV_{A,0}-PV_{A,7}, PV_{C,0}-PV_{C,7}) d'accéder à des données de la mémoire de réserve (MR_{A}, MR_{C}) associée à l'unité de traitement couplée (UT_{A}, UT_{C}) considérée, et
■ des moyens de connexion (MC) entre les mémoires de réserve, de sorte que les mémoires de réserve (MR_{A}, MR_{C}) associées à deux unités de traitement couplées (UT_{A}, UT_{C}) puissent stocker des données pouvant former un voisinage couplé de pixels de dimension maximale 2.Vl x Nc.

3. Architecture selon la revendication 2, dans laquelle les mémoires de réserve (MR) comportent chacune Vl lignes mémoire (L1-L5), chaque ligne mémoire étant apte à stocker des données d'une ligne d'une matrice, les lignes mémoire (L1-L5) étant reliées en série, de sorte qu'un flux de données stocké sur une première ligne mémoire (L1) puisse être transmis successivement aux autres lignes mémoire (L2-L4).

4. Architecture selon la revendication 3, dans laquelle les moyens de connexion (MC) entre deux mémoires de réserve (MR_{A}, MR_{C}) comportent un multiplexeur (MUX) à Vl entrées et une sortie, chaque entrée pouvant être reliée à l'une des lignes mémoire (L1_{A}-L5_{A}) d'une première mémoire de réserve (MR_{A}), la sortie pouvant être reliée à une entrée (IN_{C}) de la deuxième mémoire de réserve (MR_{C}).

5. Architecture selon l'une des revendications précédentes, dans laquelle deux unités de traitement (UT_{A}, UT_{B}) peuvent être couplées selon un axe Est/Ouest, l'architecture (20) comportant, en outre, des moyens de connexion selon l'axe Est/Ouest (MCEO) permettant à un processeur de voisinage (PV_{A,7}) d'une première unité de traitement (UT_{A}) couplée selon l'axe Est/Ouest d'échanger des données avec un processeur de voisinage (PV_{B,0}) voisin d'une deuxième unité de traitement (UTB) couplée selon l'axe Est/Ouest à la première unité de traitement (UT_{A}), de sorte que le voisinage de pixels accessible par chacun desdits processeurs de voisinage (PV_{A,7}, PV_{B,0}) soit formé de la réunion des voisinages de pixels accessibles par chacun des deux processeurs de voisinage.

6. Architecture selon la revendication 5, dans laquelle le gestionnaire de mémorisation (GM) comporte :
■ une mémoire de réserve (MR_{A}, MR_{B}) pour chaque unité de traitement (UT_{A}, UT_{B}) couplée selon l'axe Est/Ouest, chaque mémoire de réserve (MR_{A}, MR_{B}) étant apte à stocker des données du flux reçu par l'unité de traitement (UT_{A}, UT_{B}) considérée pouvant former un voisinage global de pixels de dimension Vl x Nc, l'unité de mémorisation de voisinages (UMV_{A}, UMV_{B}) de chaque unité de traitement couplée (UT_{A}, UT_{B}) permettant à chacun de ses processeurs de voisinage (PV_{A,0}-PV_{A,7}, PV_{B,0}-PV_{B,7}) d'accéder à des données de la mémoire de réserve (MR_{A}, MR_{B}) associée à l'unité de traitement couplée (UT_{A}, UT_{B}) considérée, et
■ des moyens de connexion (MC) entre les mémoires de réserve (MR_{A}, MR_{B}), de sorte que les mémoires de réserve associées à deux unités de traitement (UT_{A}, UT_{B}) couplées selon l'axe Est/Ouest puissent stocker des données pouvant former un voisinage couplé de pixels de dimension maximale Vl x 2.Nc.

7. Architecture selon l'une des revendications précédentes, comportant, en outre, des moyens de synchronisation (MS) des unités de traitement (UT_{A}, UT_{C}) couplées pour vérifier que les données devant être récupérées par les processeurs de voisinage (PV_{A,n-1}, PV_{A,n}, PV_{A,n+1}) d'une première unité de traitement (UT_{A}) ont été mises à disposition par les processeurs de voisinage (PV_{C,n-1}, PV_{C,n}, PV_{C,n+1}) d'une deuxième unité de traitement (UT_{C}) couplée avec la première unité de traitement (UT_{A}).

8. Architecture selon la revendication 7, dans laquelle les moyens de synchronisation (MS) des unités de traitement couplées comprennent un drapeau pour chaque couplage entre deux unités de traitement (UT_{A}-UT_{C}, UT_{B}-UT_{D}), chaque drapeau pouvant indiquer soit que les données devant être récupérées par les processeurs de voisinage (PV_{A,n}-1, PV_{A,n}, PV_{A,n+1}) d'une première unité de traitement (UT_{A}) ont été mises à disposition par les processeurs de voisinage (PV_{C,n-1}, PV_{C,n}, PV_{C,n+1}) d'une deuxième unité de traitement (UTC) couplée avec la première unité de traitement (UT_{A}), soit que lesdites données ne sont pas disponibles.

9. Architecture selon l'une des revendications précédentes, dans laquelle chaque unité de mémorisation de voisinages (UMV) comprend une mémoire (MP₀-MP₇) permettant de stocker les données formant les voisinages de pixels auxquels les processeurs de voisinage (PV) peuvent accéder.

10. Architecture selon l'une des revendications précédentes, dans laquelle les moyens de connexion selon l'axe Nord/Sud (MCNS) comportent, pour chaque processeur de voisinage (PV_{C,0}-PV_{C,7}) d'une unité de traitement (UT_{C}) couplée selon l'axe Nord/Sud, un registre de données (RNS) accessible par le processeur de voisinage (PV_{A,0}-PV_{A,7}) auquel il est relié.

11. Architecture selon l'une des revendications précédentes, dans laquelle les moyens de connexion intra-unité (MIU) et, le cas échéant, les moyens de connexion selon l'axe Est/Ouest (MCEO), comportent, pour chaque processeur de voisinage (PV₀-PV₇), un premier registre de données (RO) accessible par l'un de ses processeurs de voisinage voisins, et un deuxième registre de données (RE) accessible par son autre processeur de voisinage voisin.

12. Architecture selon l'une des revendications précédentes, comportant K.M unités de traitement (UT) organisées en une matrice de K unités de traitement (UT) couplées deux à deux selon l'axe Nord/Sud et M unités de traitement (UT) couplées deux à deux selon l'axe Est/Ouest, le gestionnaire de mémorisation (GM) étant configuré de sorte que les mémoires de réserve (MR) puissent stocker des données pouvant former un voisinage couplé de dimension K.Vl x M.Nc, et les moyens de connexion (MCNS, MCEO) étant configurés de sorte que le voisinage de pixels accessible par chaque processeur de voisinage (PV) d'une unité de traitement (UT) couplée puisse être étendu aux voisinages de pixels accessibles par les processeurs de voisinage des unités de traitement (UT) couplées.

## Patentansprüche

1. Architektur zum Verarbeiten eines Datenstroms, wobei die Daten Matrizen von Pixeln mit den Abmessungen NI x Nc bilden, wobei die Architektur (20) Folgendes umfasst:
- Verarbeitungseinheiten (UT), wobei jede Verarbeitungseinheit (UT) zum Empfangen eines Eingangs-Datenstroms und zum Liefern eines Ausgangs-Datenstroms ausgelegt ist, und
- Verbindungsmittel (MI) zum Empfangen eines Eingangs-Datenstroms der Architektur (20) und der Ausgangs-Datenströme der Verarbeitungseinheiten (UT) und zum Liefern eines Ausgangs-Datenstroms der Architektur (20),
wobei jede Verarbeitungseinheit (UT) Folgendes umfasst:
■ eine Steuereinheit (UC) zum Liefern von Befehlen;
■ einen Satz von Nachbarschaftsprozessoren (PV) zum Ausführen der von der Steuereinheit (UC) empfangenen Befehle und zum Liefern von Daten, die den Ausgangs-Datenstrom der Verarbeitungseinheit (UT) bilden; und
■ eine Nachbarschaftsspeichereinheit (UMV), die es zulässt, dass jeder Nachbarschaftsprozessor (PV) auf von der Verarbeitungseinheit (UT) empfangene Datenströme zugreift, die eine Nachbarschaft von Pixeln mit der Abmessung VI x Vc bilden, wobei die Nachbarschaften, auf die die Prozessoren zugreifen können, auf zusammenhängenden Pixels einer selben Reihe einer Matrix zentriert sind, wobei zwei Prozessoren Nachbarn sind, wenn die Nachbarschaften, auf die sie zugreifen können, auf zusammenhängenden Pixeln einer selben Reihe einer Matrix zentriert sind,
**dadurch gekennzeichnet, dass** zwei Verarbeitungseinheiten (UT_{A}, UT_{C}) entlang einer Nord/Süd-Achse angeschlossen werden können und jeweils Folgendes umfassen:
- dieselbe Anzahl N von Nachbarschaftsprozessoren (PV_{A,0}-PV_{A,7}, PV_{C,0}-PV_{C,7});
- Intraeinheit-Verbindungsmittel (MIU), die es zulassen, dass jeder Nachbarschaftsprozessor (PV_{A,0}-PV_{A,7}, PV_{C,0}-PV_{C,7}) Daten mit jedem seiner benachbarten Prozessoren austauscht, so dass die Nachbarschaft von Pixeln, auf die ein Nachbarschaftsprozessor zugreifen kann, auf den Satz von Nachbarschaften von Pixeln erweitert werden kann, auf die Nachbarschaftsprozessoren (PV_{A,0}-PV_{A,7}, PV_{C,0}-PV_{C,7}) der betrachteten angeschlossenen Verarbeitungseinheit (UT_{A}, UT_{C}) zugreifen können, wobei der Satz eine Nachbarschaft von Pixeln mit der Abmessung VI x (Vc+N-1) bildet;
wobei die Architektur (20) ferner Folgendes umfasst:
- einen Speichermanager (GM) zum Empfangen eines Datenstroms von Verbindungsmitteln (MI) und zum Zulassen, dass die Nachbarschaftsprozessoren (PV_{C,0}-PV_{C,7}) einer ersten angeschlossenen Verarbeitungseinheit (UT_{C}) auf Nachbarschaften von Pixeln zugreifen, die mit den Nachbarschaften von Pixeln zusammenhängen, auf die die Nachbarschaftsprozessoren (PV_{A,0}-PV_{A,7}) einer zweiten angeschlossenen Verarbeitungseinheit (UT_{A}) zugreifen können, so dass die Nachbarschaften von Pixeln, auf die die Nachbarschaftsprozessoren der beiden angeschlossenen Verarbeitungseinheiten (UT_{A}, UT_{C}) zugreifen können, eine Nachbarschaft mit den Abmessungen 2.VI x (Vc+N-1) bilden können, und
- Mittel (MCNS) zum Verbinden entlang der Nord/Süd-Achse, die es zulassen, dass jeder Nachbarschaftsprozessor (PV_{C,0}-PV_{C,7}) der ersten angeschlossenen Verarbeitungseinheit (UT_{C}) Daten mit einem der Nachbarschaftsprozessoren (PV_{A,0}-PV_{A,7}) der zweiten angeschlossenen Verarbeitungseinheit (UT_{A}) austauscht, wobei die Nachbarschaftsprozessoren paarweise verbunden sind, so dass sie Zugang zu Nachbarschaften von Pixeln haben, die auf einer selben Spalte einer Matrix zentriert sind, so dass die Nachbarschaft von Pixeln, auf die jeder Nachbarschaftsprozessor (PV_{A,0}-PV_{A,7}, PV_{C,0}-PV_{C,7}) zugreifen kann, auf die Nachbarschaften von Pixeln erweitert wird, auf die der Nachbarschaftsprozessor zugreifen kann, mit dem er verbunden ist.

2. Architektur nach Anspruch 1, wobei der Speichermanager (GM) Folgendes umfasst:
■ einen Reservespeicher (MR_{A}, MR_{C}) für jede Verarbeitungseinheit (UT_{A}, UT_{C}), die entlang der Nord/Süd-Achse angeschlossen ist, wobei jeder Reservespeicher (MR_{A}, MR_{C}) zum Speichern von Daten des von der betrachteten Verarbeitungseinheit (UT_{A}, UT_{C}) empfangenen Stroms ausgelegt ist, die eine globale Nachbarschaft von Pixeln mit den Abmessungen VI x Nc bilden können, wobei die Nachbarschaftsspeichereinheit (UMV_{A}, UMV_{C}) jeder angeschlossenen Verarbeitungseinheit (UT_{A}, UT_{C}) es zulässt, dass jeder ihrer Nachbarschaftsprozessoren (PV_{A,0}-PV_{A,7}, PV_{C,0}-PV_{C,7}) auf Daten des Reservespeichers (MR_{A}, MR_{C}) zugreift, die mit der betrachteten angeschlossenen Verarbeitungseinheit (UT_{A}, UT_{C}) assoziiert sind, und
■ Mittel (MC) zum Verbinden zwischen den Reservespeichern, so dass die mit zwei angeschlossenen Verarbeitungseinheiten (UT_{A}, UT_{C}) assoziierten Reservespeicher (MR_{A}, MR_{C}) Daten speichern können, die eine angeschlossene Nachbarschaft von Pixeln mit maximalen Abmessungen 2.VI x Nc bilden können.

3. Architektur nach Anspruch 2, wobei die Reservespeicher (MR) jeweils VI Speicherreihen (L1-L5) umfassen, wobei jede Speicherreihe zum Speichern von Daten einer Reihe einer Matrix ausgelegt ist, wobei die Speicherreihen (L1-L5) in Serie geschaltet sind, so dass ein auf einer ersten Speicherreihe (L1) gespeicherter Datenstrom nacheinander zu den anderen Speicherreihen (L2-L4) übertragen werden kann.

4. Architektur nach Anspruch 3, wobei das Verbindungsmittel (MC) zwischen zwei Reservespeichern (MR_{A}, MR_{C}) einen Multiplexer (MUX) mit VI Eingängen und einem Ausgang umfasst, wobei jeder Eingang mit einer der Speicherreihen (L1_{A}-L5_{A}) eines ersten Reservespeichers (MR_{A}) verbunden werden kann und der Ausgang mit einem Eingang (IN_{C}) des zweiten Reservespeichers (MR_{C}) verbunden werden kann.

5. Architektur nach einem der vorherigen Ansprüche, wobei zwei Verarbeitungseinheiten (UT_{A}, UT_{B}) entlang einer Ost/West-Achse angeschlossen werden können, wobei die Architektur (20) ferner Mittel (MCEO) zum Verbinden entlang der Ost/West-Achse umfasst, die es zulassen, dass ein Nachbarschaftsprozessor (PV_{A,7}) einer entlang der Ost/West-Achse angeschlossenen ersten Verarbeitungseinheit (UT_{A}) Daten mit einem benachbarten Nachbarschaftsprozessor (PV_{B,0}) einer entlang der Ost/West-Achse angeschlossenen zweiten Verarbeitungseinheit (UTB) mit der ersten Verarbeitungseinheit (UT_{A}) austauscht, so dass die Nachbarschaft von Pixeln, auf die jeder der Nachbarschaftsprozessoren (PV_{A,7}, PV_{B,0}) zugreifen kann, durch das Zusammentreffen der Nachbarschaften von Pixeln gebildet wird, auf die jeder der beiden Nachbarschaftsprozessoren zugreifen kann.

6. Architektur nach Anspruch 5, wobei der Speichermanager (GM) Folgendes umfasst:
■ einen Reservespeicher (MR_{A}, MR_{B}) für jede entlang der Ost/West-Achse angeschlossene Verarbeitungseinheit (UT_{A}, UT_{B}), wobei jeder Reservespeicher (MR_{A}, MR_{B}) zum Speichern von Daten des von der betrachteten Verarbeitungseinheit (UT_{A}, UT_{B}) empfangenen Stroms ausgelegt ist, die eine globale Nachbarschaft von Pixeln mit den Abmessungen VI x Nc bilden können, wobei die Nachbarschaftsspeichereinheit (UMV_{A}, UMV_{B}) jeder angeschlossenen Verarbeitungseinheit (UT_{A}, UT_{B}) es zulässt, dass jeder ihrer Nachbarschaftsprozessoren (PV_{A,0}-PV_{A,7}, PV_{B,0}-PV_{B,7}) auf Daten des Reservespeichers (MR_{A}, MR_{B}) zugreift, die mit der betrachteten angeschlossenen Verarbeitungseinheit (UT_{A}, UT_{B}) assoziiert sind, und
■ Mittel (MC) zum Verbinden zwischen den Reservespeichern (MR_{A}, MR_{B}), so dass die mit zwei entlang der Ost/West-Achse angeschlossenen Verarbeitungseinheiten (UT_{A}, UT_{B}) assoziierten Reservespeicher Daten speichern können, die eine angeschlossene Nachbarschaft von Pixeln mit den maximalen Abmessungen VI x 2.Nc bilden können.

7. Architektur nach einem der vorherigen Ansprüche, die ferner Mittel (MS) zum Synchronisieren von angeschlossenen Verarbeitungseinheiten (UT_{A}, UT_{C}) umfassen, um zu prüfen, ob die Daten, die von den Nachbarschaftsprozessoren (PV_{A,n-1}, PV_{A,n}, PV_{A,n+1}) einer ersten Verarbeitungseinheit (UT_{A}) zu sammeln sind, von den Nachbarschaftsprozessoren (PV_{C,n-1}, PV_{C,n}, PV_{C,n+1}) einer an die erste Verarbeitungseinheit (UT_{A}) angeschlossenen zweiten Verarbeitungseinheit (UT_{C}) verfügbar gemacht wurden.

8. Architektur nach Anspruch 7, wobei die Mittel (MS) zum Synchronisieren von angeschlossenen Verarbeitungseinheiten einen Flag für jeden Anschluss zwischen zwei Verarbeitungseinheiten (UT_{A}-UT_{C}, UT_{B}-UT_{D}) umfassen, wobei jeder Flag entweder anzeigen kann, dass die Daten, die von den Nachbarschaftsprozessoren (PV_{A,n-1}, PV_{A,n}, PV_{A,n+1}) einer ersten Verarbeitungseinheit (UT_{A}) zu sammeln sind, von den Nachbarschaftsprozessoren (PV_{C,n-1}, PV_{C,n}, PV_{C,n+1}) einer an die erste Verarbeitungseinheit (UT_{A}) angeschlossenen zweiten Verarbeitungseinheit (UT_{C}) verfügbar gemacht wurden oder dass diese Daten nicht verfügbar sind.

9. Architektur nach einem der vorherigen Ansprüche, wobei jede Nachbarschaftsspeichereinheit (UMV) einen Speicher (MP₀-MP₇) umfasst, der die Speicherung der Daten zulässt, die die Nachbarschaften von Pixeln bilden, auf die die Nachbarschaftsprozessoren (PV) zugreifen können.

10. Architektur nach einem der vorherigen Ansprüche, wobei die Mittel (MCNS) zum Verbinden entlang der Nord/Süd-Achse für jeden Nachbarschaftsprozessor (PV_{C,0}-PV_{C,7}) einer entlang der Nord/Süd-Achse angeschlossenen Verarbeitungseinheit (UT_{C}) ein Datenregister (RNS) umfasst, auf das der Nachbarschaftsprozessor (PV_{A,0}-PV_{A,7}) zugreifen kann, mit dem es verbunden ist.

11. Architektur nach einem der vorherigen Ansprüche, wobei die Intraeinheit-Verbindungsmittel (MIU) und, gegebenenfalls, die Mittel zum Verbinden entlang der Ost/West-Achse für jeden Nachbarschaftsprozessor (PV₀-PV₇) ein erstes Datenregister (RO), auf das einer seiner benachbarten Nachbarschaftsprozessorn zugreifen kann, und ein zweites Datenregister (RE), auf das sein anderer benachbarter Nachbarschaftsprozessor zugreifen kann, umfassen.

12. Architektur nach einem der vorherigen Ansprüche, die K.M Verarbeitungseinheiten (UT) umfasst, die in einer Matrix von K Verarbeitungseinheiten (UT) angeordnet sind, die paarweise entlang der Nord/Süd-Achse angeschlossen sind, und M Verarbeitungseinheiten (UT), die paarweise entlang der Ost/West-Achse angeschlossen sind, wobei der Speichermanager (GM) so konfiguriert ist, dass die Reservespeicher (MR) Daten speichern können, die eine angeschlossene Nachbarschaft mit der Abmessung K.VI x M.Nc bilden, und die Verbindungsmittel (MCNS, MCEO) so konfiguriert sind, dass die Nachbarschaft von Pixeln, auf die jeder Nachbarschaftsprozessor (PV) einer angeschlossenen Verarbeitungseinheit (UT) zugreifen kann, auf die Nachbarschaften von Pixeln erweitert werden kann, auf die die Nachbarschaftsprozessoren der angeschlossenen Verarbeitungseinheiten (UT) zugreifen können.

## Claims

1. An architecture for processing a data stream, said data forming matrices of pixels of dimension NI x Nc, said architecture (20) comprising:
- processing units (UT), with each processing unit (UT) being designed to receive an input data stream and to deliver an output data stream, and
- interconnection means (MI) designed to receive an input data stream of said architecture (20) and the output data streams of said processing units (UT), and designed to deliver an output data stream of said architecture (20),
each processing unit (UT) comprising:
■ a control unit (UC) designed to provide instructions;
■ a set of neighbourhood processors (PV) designed to complete the instructions received from said control unit (UC) and to provide data forming the output data stream of said processing unit (UT); and
■ a neighbourhood storage unit (UMV) allowing each neighbourhood processor (PV) to access data streams received by said processing unit (UT) forming a neighbourhood of pixels of dimension VI x Vc, with the neighbourhoods that can be accessed by the processors being centred on contiguous pixels of the same row of a matrix, with two processors being neighbours when the neighbourhoods they can access are centred on contiguous pixels of the same row of a matrix,
**characterised in that** two processing units (UT_{A}, UT_{C}) can be coupled along a North/South axis and each comprise:
- the same number N of neighbourhood processors (PV_{A,0}-PV_{A,7}, PV_{C,0}-PV_{C,7});
- intra-unit connection means (MIU) allowing each neighbourhood processor (PV_{A,0}-PV_{A,7}, PV_{C,0}-PV_{C,7}) to exchange data with each of its neighbouring processors so that the neighbourhood of pixels that can be accessed by a neighbourhood processor can be extended to the set of neighbourhoods of pixels that can be accessed by the neighbourhood processors (PV_{A,0}-PV_{A,7}, PV_{C,0}-PV_{C,7}) of the considered coupled processing unit (UT_{A}, UT_{C}), said set forming a neighbourhood of pixels of dimension VI x (Vc+N-1);
said architecture (20) further comprising:
- a storage manager (GM) designed to receive a data stream from interconnection means (MI) and allowing the neighbourhood processors (PV_{C,0}-PV_{C,7}) of a first coupled processing unit (UT_{C}) to access neighbourhoods of pixels contiguous with the neighbourhoods of pixels that can be accessed by the neighbourhood processors (PV_{A,0}-PV_{A,7}) of a second coupled processing unit (UT_{A}) so that the neighbourhoods of pixels that can be accessed by the neighbourhood processors of the two coupled processing units (UT_{A}, UT_{C}) can form a neighbourhood of dimension 2.VI x (Vc+N-1), and
- means (MCNS) for connecting along the North/South axis, allowing each neighbourhood processor (PV_{C,0}-PV_{C,7}) of said first coupled processing unit (UT_{C}) to exchange data with one of the neighbourhood processors (PV_{A,0}-PV_{A,7}) of said second coupled processing unit (UT_{A}), with the neighbourhood processors being connected pairwise so as to have access to neighbourhoods of pixels centred on the same column of a matrix, so that the neighbourhood of pixels that can be accessed by each neighbourhood processor (PV_{A,0}-PV_{A,7}, PV_{C,0}-PV_{C,7}) can be extended to the neighbourhoods of pixels that can be accessed by the neighbourhood processor to which it is connected.

2. The architecture according to claim 1, wherein said storage manager (GM) comprises:
■ a reserve memory (MR_{A}, MR_{C}) for each processing unit (UT_{A}, UT_{C}) coupled along the North/South axis, with each reserve memory (MR_{A}, MR_{C}) being designed to store data from the stream received by the considered processing unit (UT_{A}, UT_{C}), which data can form a global neighbourhood of pixels of dimension VI x Nc, with the neighbourhood storage unit (UMV_{A}, UMV_{C}) of each coupled processing unit (UT_{A}, UT_{C}) allowing each of its neighbourhood processors (PV_{A,0}-PV_{A,7}, PV_{C,0}-PV_{C,7}) to access data of the reserve memory (MR_{A}, MR_{C}) associated with the considered coupled processing unit (UT_{A}, UT_{C}), and
■ means (MC) for connecting between the reserve memories so that the reserve memories (MR_{A}, MR_{C}) associated with two coupled processing units (UT_{A}, UT_{C}) can store data that can form a coupled neighbourhood of pixels of maximum dimension 2.VI x Nc.

3. The architecture according to claim 2, wherein the reserve memories (MR) each comprise VI memory rows (L1-L5), with each memory row being designed to store data of a row of a matrix, with the memory rows (L1-L5) being connected in series, so that a data stream stored on a first memory row (L1) can be successively transmitted to the other memory rows (L2-L4).

4. The architecture according to claim 3, wherein the connection means (MC) between two reserve memories (MR_{A}, MR_{C}) comprise a multiplexer (MUX) with VI inputs and one output, each input can be connected to one of the memory rows (L1_{A}-L5_{A}) of a first reserve memory (MR_{A}), the output can be connected to an input (IN_{C}) of the second reserve memory (MR_{C}).

5. The architecture according to any one of the preceding claims, wherein two processing units (UT_{A}, UT_{B}) can be coupled along an East/West axis, said architecture (20) further comprising means (MCEO) for connecting along the East/West axis allowing a neighbourhood processor (PV_{A,7}) of a first processing unit (UT_{A}) coupled along the East/West axis to exchange data with a neighbourhood processor (PV_{B,0}) neighbouring a second processing unit (UTB) coupled along the East/West axis to the first processing unit (UT_{A}) so that the neighbourhood of pixels that can be accessed by each of said neighbourhood processors (PV_{A,7}, PV_{B,0}) is formed by the meeting of the neighbourhoods of pixels that can be accessed by each of the two neighbourhood processors.

6. The architecture according to claim 5, wherein said storage manager (GM) comprises:
■ a reserve memory (MR_{A}, MR_{B}) for each processing unit (UT_{A}, UT_{B}) coupled along the East/West axis, with each reserve memory (MR_{A}, MR_{B}) being designed to store data from the stream received by the considered processing unit (UT_{A}, UT_{B}), which data can form a global neighbourhood of pixels of dimension VI x Nc, with the neighbourhood storage unit (UMV_{A}, UMV_{B}) of each coupled processing unit (UT_{A}, UT_{B}) allowing each of its neighbourhood processors (PV_{A,0}-PV_{A,7}, PV_{B,0}-PV_{B,7}) to access data of the reserve memory (MR_{A}, MR_{B}) associated with the considered coupled processing unit (UT_{A}, UT_{B}), and
■ means (MC) for connecting between the reserve memories (MR_{A}, MR_{B}) so that the reserve memories associated with two processing units (UT_{A}, UT_{B}) coupled along the East/West axis can store data that can form a coupled neighbourhood of pixels of maximum dimension VI x 2.Nc.

7. The architecture according to any one of the preceding claims, further comprising means (MS) for synchronising coupled processing units (UT_{A}, UT_{C}) so as to verify that the data that has to be gathered by the neighbourhood processors (PV_{A,n-1}, PV_{A,n}, PV_{A,n+1}) of a first processing unit (UT_{A}) has been made available by the neighbourhood processors (PV_{C,n-1}, PV_{C,n}, PV_{C,n+1}) of a second processing unit (UT_{C}) coupled to the first processing unit (UT_{A}).

8. The architecture according to claim 7, wherein the means (MS) for synchronising the coupled processing units comprise a flag for each coupling between two processing units (UT_{A}-UT_{C}, UT_{B}-UT_{D}), with each flag being able to indicate either that the data that has to be gathered by the neighbourhood processors (PV_{A,n-1}, PV_{A,n}, PV_{A,n+1}) of a first processing unit (UT_{A}) has been made available by the neighbourhood processors (PV_{C,n-1}, PV_{C,n}, PV_{C,n+1}) of a second processing unit (UT_{C}) coupled to the first processing unit (UT_{A}) or that said data is not available.

9. The architecture according to any one of the preceding claims, wherein each neighbourhood storage unit (UMV) comprises a memory (MP₀-MP₇) allowing the storage of the data forming the neighbourhoods of pixels that can be accessed by the neighbourhood processors (PV).

10. The architecture according to any one of the preceding claims, wherein the means (MCNS) for connecting along the North/South axis comprise, for each neighbourhood processor (PV_{C,0}-PV_{C,7}) of a processing unit (UT_{C}) coupled along the North/South axis, a data register (RNS) that can be accessed by the neighbourhood processor (PV_{A,0}-PV_{A,7}) to which it is connected.

11. The architecture according to any one of the preceding claims, wherein the intra-unit connection means (MIU) and, where necessary, the means (MCEO) for connecting along the East/West axis comprise, for each neighbourhood processor (PV₀-PV₇), a first data register (RO) that can be accessed by one of its neighbouring neighbourhood processors, and a second data register (RE) that can be accessed by its other neighbouring neighbourhood processor.

12. The architecture according to any one of the preceding claims, comprising K.M processing units (UT) arranged in a matrix of K processing units (UT) coupled pairwise along the North/South axis and M processing units (UT) coupled pairwise along the East/West axis, with said storage manager (GM) being configured so that the reserve memories (MR) can store data that can form a coupled neighbourhood of dimension K.VI x M.Nc, and the connection means (MCNS, MCEO) are configured so that the neighbourhood of pixels that can be accessed by each neighbourhood processor (PV) of a coupled processing unit (UT) can be extended to the neighbourhoods of pixels that can be accessed by the neighbourhood processors of the coupled processing units (UT).
